# EUROPÄISCHE PATENTSCHRIFT

(11) **EP 2 520 820 B1**
(45) Veröffentlichungstag und Bekanntmachung des Hinweises auf die Patenterteilung: **13.07.2016**
(21) Anmeldenummer: 12166738.0
(22) Anmeldetag: 04.05.2012
(51) Int. Cl.: F16D 65/56, F16D 55/226

(54) **Scheibenbremse, insbesondere für ein Nutzfahrzeug**
Disc brake, in particular for a commercial vehicle
Frein à disque, en particulier pour un véhicule utilitaire

(30) Priorität: 05.05.2011 DE 102011100539
(43) Veröffentlichungstag der Anmeldung: 07.11.2012
(73) Patentinhaber: KNORR-BREMSE Systeme für Nutzfahrzeuge GmbH, 80809 München (DE)
(72) Erfinder: Beck, Thomas, 94034 Passau (DE); Gruber, Markus, 85560 Ebersberg (DE)
(74) Vertreter: Mattusch, Gundula

(56) Entgegenhaltungen:
- EP-A1- 0 648 952
- WO-A1-93/22579
- WO-A1-2008/025489
- WO-A2-2009/074222

## Beschreibung

Die Erfindung betrifft eine Scheibenbremse, insbesondere für ein Nutzfahrzeug, nach dem Oberbegriff des Anspruchs 1.

Um die in einem Aufnahmeraum des Bremssattels angeordneten funktionsrelevanten Bauteile, wie eine Zuspanneinrichtung, vor Korrosion durch Witterungseinflüsse zu schützen, ist dieser Aufnahmeraum weitgehend verschlossen und zwar auf der bei einer Schiebesattelbremse dem zuspannseitigen Bremsbelag zugeordneten Seite mittels eines Verschlussdeckels.

Die Stellspindeln, die durch Betätigung der Zuspanneinrichtung gegen den Bremsbelag drückbar sind, sind durch den Verschlussdeckel geführt und hier jeweils durch einen Faltenbalg abgedichtet.

Als Bestandteil einer Nachstelleinrichtung, mit der ein verschleißbedingtes Lüftspiel ausgleichbar ist, sind die Stellspindeln als Gewinderohre ausgebildet und zum Lüftspielausgleich verdrehbar.

Zur Bremskraftübertragung auf den Bremsbelag ist an jede Stellspindel stirnseitig ein Druckstück angeschlossen, gegenüber dem die Stellspindel verdrehbar ist.

Da der Faltenbalg, der sowohl am Verschlussdeckel wie auch am Druckstück reibschlüssig gehalten ist, auf Grund der Relativbewegung der Stellspindel zum Verschlussdeckel aus einem elastischen, d.h. deformierbaren Material besteht, ist im Verbindungsbereich sowohl mit dem Verschlussdeckel wie auch mit dem Druckstück in den anliegenden Endbereichen eine stabile, üblicherweise metallische Einlage eingearbeitet, bevorzugt durch Umspritzen, wenn der Faltenbalg insgesamt aus Kunststoff hergestellt ist.

Wenngleich der Faltenbalg druckstückseitig durch Verprägen fixiert ist, besteht die Gefahr, dass die reibschlüssige Verbindung in diesem Bereich durch die Relativbewegung der Stellspindel so weit gelöst wird, dass der Faltenbalg aus dem Verbindungsbereich mit dem Druckstück herauswandert, so dass eine dauerhaft angestrebte Dichtwirkung nicht gewährleistet ist.

Neben dem rein funktionalen Nachteil sind auch Nachteile bezüglich der Herstellung zu beklagen. Hierzu zählt insbesondere das Einbringen der metallischen Einlage sowie das Verprägen des Faltenbalges im Anlagebereich mit dem Druckstück.

Da Scheibenbremsen in großen Stückzahlen hergestellt werden, kommt diesem Umstand naturgemäß eine besondere Bedeutung zu.

In der WO 2009/074222 A2 sowie der WO 93/22579 A1 ist jeweils eine Scheibenbremse geoffenbart, die insoweit vom gattungsbildenden Stand der Technik abweicht, als die ein Druckstück tragende, verdrehfest gehaltene Stellspindel in einer ein Muttergewinde aufweisenden, gegenüber der Stellspindel verdrehbaren Gewindehülse gehalten ist, so dass bei deren Verdrehung die Stellspindel eine axiale Zustellbewegung vollführt. Dabei ist der Faltenbalg mit einem Ende an dem ebenfalls verdrehfesten Druckstück angeschlossen.

Der WO 2008/025489 A1 ist eine Scheibenbremse zu entnehmen, bei der der Faltenbalg an eine die Stellspindel auf ihrer dem Druckstück zugewandten Stirnseite überdeckende Haube angeschlossen ist, wobei der Faltenbalg an der Stellspindel frei drehbar und axial gesichert gelagert ist.

Der Erfindung liegt die Aufgabe zugrunde, eine Scheibenbremse der gattungsgemäßen Art so weiterzuentwickeln, dass ihre Betriebssicherheit verbessert, die Standzeit erhöht und die Fertigungs- bzw. Montagekosten reduziert werden.

Diese Aufgabe wird durch eine Scheibenbremse mit den Merkmalen des Anspruchs 1 gelöst.

Durch diese konstruktive Ausbildung werden eine ganze Reihe von Vorteilen gegenüber dem Stand der Technik erzielt.

So ist zunächst zu erwähnen, dass ein Herausgleiten des Faltenbalges im Anlagebereich mit der Stellspindel ausgeschlossen ist, selbst wenn der Faltenbalg hier relativ zur Stellspindel axial wandert. Naturgemäß führt dies zu einer Verbesserung der Betriebssicherheit, da damit Fehlfunktionen quasi ausgeschlossen sind.

Überdies ist der Aufnahmeraum über die gesamte Betriebszeit der Scheibenbremse abgedichtet, so dass weder Schmutz noch Feuchtigkeit in den Aufnahmeraum dringen können, was die darin befindlichen Funktionsteile in Mitleidenschaft ziehen würde. Damit wird durch die Erfindung auch eine Erhöhung der Standzeit erreicht. Die verbesserte Funktions- bzw. Betriebssicherheit führt letztendlich zu einer Betriebskostenoptimierung, zumindest aber zu einer Betriebskostenreduzierung.

Darüber hinaus ergeben sich durch die Erfindung verminderte Fertigungskosten, da auf die Einbettung eines Verstärkungsringes im Anlagebereich mit der Stellspindel verzichtet werden kann. Die dem elastischen Material, aus dem der Faltenbalg besteht, innewohnenden Rückstellkräfte reichen aus, um eine dichte Anlage an der Stellspindel zu bewirken. Allerdings sind diese Rückstellkräfte durch eine entsprechende Materialwahl bzw. Dimensionierung so ausgelegt, dass eine Relativverdrehung der Stellspindel zum Faltenbalg möglich ist, ohne umfängliche Verformung des Faltenbalges im Sinne einer Verdrillung.

Die Erfindung sieht vor, dass der Faltenbalg in axialer Richtung formschlüssig an der Stellspindel gehalten ist, wozu nach einem weiteren Gedanken der Erfindung in der Stellspindel eine mantelseitig umlaufende Ringnut vorgesehen ist, in der ein Dichtwulst des Faltenbalges einliegt.

Hierdurch wird gewährleistet, dass der Faltenbalg bei einer Axialbewegung der Stellspindel zuverlässig gehalten wird, d.h., eine axiale Relativbewegung zur Stellspindel ist ausgeschlossen und damit auch ein möglicher Abrieb des Faltenbalg-Materials im Dauerbetrieb.

Da zumindest im Bereich des Dichtwulstes auf eine metallische Einlage verzichtet werden kann, gestaltet sich die Herstellung des Faltenbalges gegenüber einem solchen nach dem Stand der Technik wesentlich kostengünstiger. Lediglich als zusätzliche Maßnahme ist das Einstechen der Ringnut in die Stellspindel erforderlich, was jedoch im Verhältnis nur sehr geringe Kosten verursacht.

Um die wirksamen Reibkräfte beim Verdrehen der Stellspindel gegen den Faltenbalg gering zu halten, ist an den Dichtwulst zumindest eine Lippe angeformt, die am planen Grund der Ringnut anliegt, unter Minimierung des Reibwiderstandes.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: eine Einzelheit der Scheibenbremse in einer geschnittenen perspektivischen Ansicht.

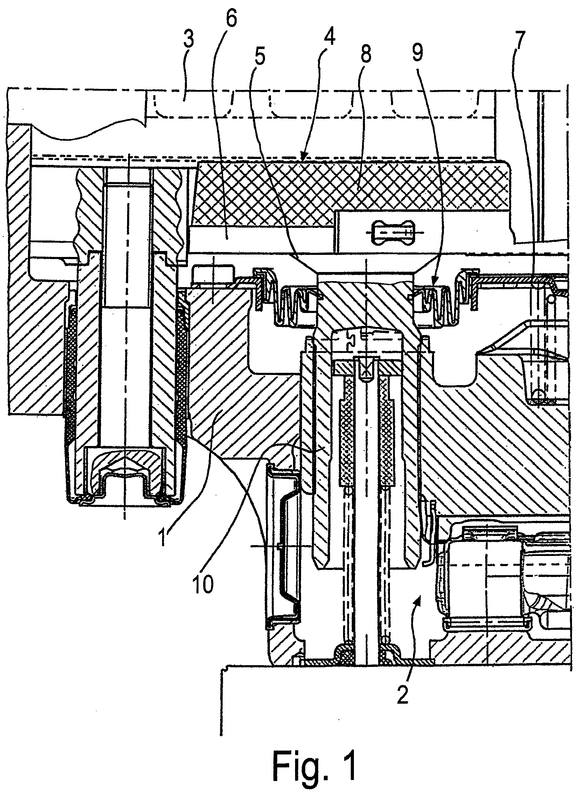

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbeläge 4 angeordnet, von denen hier ein aktionsseitiger dargestellt ist, der im Funktionsfall gegen die Bremsscheibe 3 pressbar ist.

Der Bremsbelag 4 besteht aus einer Trägerplatte 6 und einem auf deren der Bremsscheibe 3 zugewandten Seite befestigten Reibbelag 8.

Über eine im Bremssattel 1 angeordnete mit einem Drehhebel betätigbare Zuspanneinrichtung 2 wird bei einer Bremsung eine Stellspindel 10 mit einem stirnseitig verdrehbar angeschlossenen Druckstück 5 gegen den Bremsbelag 4 gedrückt. Anstelle des an der Stellspindel 10 befestigten Druckstücks 5 kann dies auch fest mit der Trägerplatte 6 verbunden sein.

Zur Einstellung eines Lüftspiels zwischen dem Reibbelag 8 und der Bremsscheibe 3, unter Berücksichtigung des Verschleißes des Reibbelages 8, ist die bereichsweise als Gewindespindel ausgebildete Stellspindel 10 drehbar im Bremssattel 1 gelagert und über eine nicht dargestellt Nachstelleinrichtung verdrehbar.

Der Bremssattel 1 ist auf seiner der Bremsscheibe 3 zugewandten Seite weitgehend durch einen Verschlussdeckel 7 verschlossen, der im Austrittsbereich der Stellspindel 10 zum Bremsbelag 4 durchbrochen ist. Zur Abdichtung des Austrittsbereichs ist ein mit dem Verschlussdeckel 7 reibschlüssig verbundener Faltenbalg 9 vorgesehen, der andersseitig jedoch relativ verdrehbar an der Stellspindel 10 anliegt.

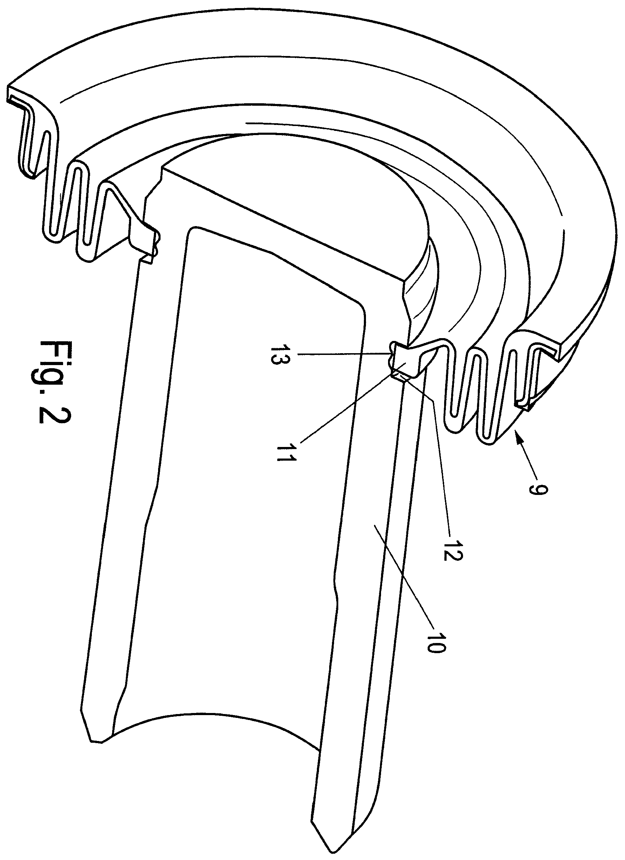

In der Figur 2 ist die Verbindung des Faltenbalges 9 mit der Stellspindel als Einzelheit dargestellt. Es ist zu erkennen, dass die Stellspindel 10 im gewindefreien Bereich ihrer Mantelfläche eine umlaufende Ringnut 12 aufweist, in der ein Dichtwulst 11 des Faltenbalges 9, der durchgängig aus dem gleichen Material wie der Faltenbalg 9 im Übrigen besteht, einliegt.

Dabei ist der im Querschnitt etwa quaderförmig ausgebildete Dichtwulst 11 so bemessen, dass eine axiale Relativbewegung des Faltenbalges zur Stellspindel 10 weitgehend verhindert ist.

Der Dichtwulst 11 weist eine umfängliche, lippenförmige Erhebung 13 auf, die am Grund der Ringnut 12 anliegt. Hierdurch ist gewährleistet, dass lediglich geringe Reibwiderstände beim Verdrehen der Stellspindel 10 gegenüber dem Faltenbalg 9 zu überwinden sind, sodass eine problemlose Relativverdrehung zwischen beiden Bauteilen gewährleistet ist.

### Bezugszeichenliste

- 1: Bremssattel
- 2: Zuspanneinrichtung
- 3: Bremsscheibe
- 4: Bremsbelag
- 5: Druckstück
- 6: Trägerplatte
- 7: Verschlussdeckel
- 8: Reibbelag
- 9: Faltenbalg
- 10: Stellspindel
- 11: Dichtwulst
- 12: Ringnut
- 13: lippenförmige Erhebung

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine drehbare Stellspindel (10) mittels einer Zuspanneinrichtung betätigbar ist, wobei die Stellspindel (10) durch einen einen Aufnahmeraum (2) des Bremssattels (1) zur Bremsscheibe (3) hin verschließenden Verschlussdeckel (7) geführt ist, an dem zur Abdichtung ein andererseits an der Stellspindel (10) befestigter Faltenbalg (9) angeschlossen ist, **dadurch gekennzeichnet, dass** der Faltenbalg (9) dicht, jedoch relativ verdrehbar und in axialer Richtung formschlüssig gesichert an der Stellspindel (10) anliegt.

2. Scheibenbremse nach Anspruch 1, **dadurch gekennzeichnet, dass** die Stellspindel (10) mantelseitig eine umlaufende Ringnut (12) aufweist, in der ein Dichtwulst (11) des Faltenbalges (9) einliegt.

3. Scheibenbremse nach Anspruch 2, **dadurch gekennzeichnet, dass** der Dichtwulst (11) aus dem gleichen elastischen Material besteht, wie der Faltenbalg (9) im Übrigen.

4. Scheibenbremse nach einen der Ansprüche 2 oder 3, **dadurch gekennzeichnet, dass** der Dichtwulst (11) mindestens eine umlaufende, lippenförmige Erhebung (13) aufweist, die am Grund der Ringnut (12) anliegt.

5. Scheibenbremse nach einen der Ansprüche 2 bis 4, bei der die Stellspindel (10) bereichsweise ein Außengewinde aufweist, **dadurch gekennzeichnet, dass** die Ringnut (12) außerhalb des Gewindebereichs angeordnet ist.

6. Scheibenbremse nach einen der Ansprüche 2 bis 5, **dadurch gekennzeichnet, dass** der Dichtwulst (11) im Querschnitt etwa quaderförmig ausgebildet ist

## Claims

1. Disc brake comprising a brake calliper (1), in which two brake pads (4) which can be pressed against a brake disc (3) in operation are located, an action-side brake pad (4) being actuable via at least one rotatable actuating spindle (10) by means of an application device, wherein the actuating spindle (10) is guided through a closing cover (7), which seals a location chamber (2) of the brake calliper (1) towards the brake disc (3) and to which is connected a bellows (9) secured to the actuating spindle (10) on the other hand to form a seal, **characterised in that** the bellows (9) is in tight contact with the actuating spindle (10) while being relatively rotatable and positively secured in the axial direction.

2. Disc brake according to claim 1,
**characterised in that** the actuating spindle (10) has a continuous annular groove (12) on its outer circumference, in which a sealing bead (11) of the bellows (9) is located.

3. Disc brake according to claim 2,
**characterised in that** the sealing bead (11) is made of the same elastic material as the rest of the bellows (9).

4. Disc brake according to claim 2 or 3,
**characterised in that** the sealing bead (11) has at least one continuous lip-shaped high area (13), which bears against the base of the annular groove (12).

5. Disc brake according to any of claims 2 to 4, wherein a section of the actuating spindle (10) is provided with a male thread,
**characterised in that** the annular groove (12) is located outside the threaded section.

6. Disc brake according to any of claims 2 to 5,
**characterised in that** the sealing bead (11) is approximately rectangular in cross-section.

## Revendications

1. Frein à disque à un étrier de frein (1), dans lequel deux garnitures de frein sont disposées, qui sont aptes à être pressé, en fonction, contre une disque de frein, dont une du côté d'action est actionnable moyennant un dispositif d'application via une broche de réglage rotative, à ladite broche de réglage (10) étant passée à travers un couvercle de fermeture (7), qui ferme un espace réceptrice (2) dudit étrier de frein (1) vers ladite disque de frein (3), auquel un soufflet (9) est relié pour assurer l'étanchéité en étant fixé,, d'autre côté, à ladite broche de réglage, **caractérisé en ce que** ledit soufflet (9) porte contre ladite broche de réglage (10) de manière étanche, mais aussi à rotation relative et de manière sécurisée, à ajustage craboté.

2. Frein à disque selon la revendication 1, **caractérisé en ce que** ladite broche de réglage (10) comprend une rainure annulaire circonférentielle (12) du côté de l'enveloppe, dans lequel est placé un bourrelet d'étanchéité (11) dudit soufflet.

3. Frein à disque selon la revendication 1 ou 2, **caractérisé en ce que** ledit bourrelet d'étanchéité consiste en le même matériau élastique que ledit soufflet (9) pour le reste.

4. Frein à disque selon une quelconque des revendications 2 ou 3, **caractérisé en ce que** ledit bourrelet d'étanchéité (11) est muni d'au moins une saillie en lèvre circonférentielle (13) qui porte contre le fond de ladite rainure annulaire (12).

5. Frein à disque selon une quelconque des revendications 2 à 4, dans lequel ladite broche de réglage (10) comprend un filetage extérieur en régions particulières, **caractérisé en ce que** ladite rainure annulaire (12) est disposée à l'extérieur de ladite région filetée.

6. Frein à disque selon une quelconque des revendications 2 à 5, **caractérisé en ce que** ledit bourrelet d'étanchéité (11) a une configuration parallélépipédique environ en section transversale.
